# EUROPEAN PATENT SPECIFICATION

(11) **EP 1 826 679 B1**
(45) Date of publication and mention of the grant of the patent: **26.06.2013**
(21) Application number: 06127339.7
(22) Date of filing: 29.12.2006
(51) Int. Cl.: G06F 13/38

(54) **Bluetooth communication through a single virtual port**
Bluetooth-Kommunikation über virtuellen Einzelport
Communication Bluetooth par le biais d'un seul port virtuel

(30) Priority: 30.12.2005 CA 2531896; 30.12.2005 US 324078
(43) Date of publication of application: 29.08.2007
(73) Proprietor: Psion Inc., Mississauga, ON L5N 7J9 (CA)
(72) Inventor: Lee, Reo, Mississauga Ontario L5W 1A8 (CA)
(74) Representative: Treleven, Colin

(56) References cited:
- EP-A- 1 261 174
- US-B1- 6 760 804

## Description

### FIELD OF INVENTION

The invention relates generally to devices enabled with Bluetooth capabilities, and more particularly for enhancing usability of Serial Port Profile (SPP) of the Bluetooth Protocol.

### BACKGROUND OF THE INVENTION

The Bluetooth communications protocol is a system for short-range wireless communication between devices.

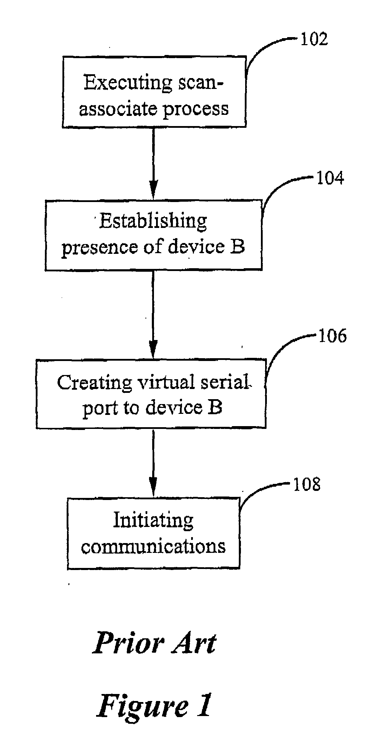

In a typical scenario a Bluetooth enabled device A wishes to communicate with similarly enabled device B using a Bluetooth connection. In a traditional configuration communication cannot take place at the first instance where the devices are in range to do so. Namely device A does not a priori know of the presence of device B and therefore can not communicate with it. A flow chart of the process for establishing communications is shown in Figure 1. At step 102 device A executes a scan-associate process at the time communications are requested. This scan-associate process is often a time consuming process with times of up to a couple of minutes being common. The presence of device B is established at step 104. With the presence of device B established a virtual serial port is created in device A at step 106 and at step 108 communications are initiated between device A and B.

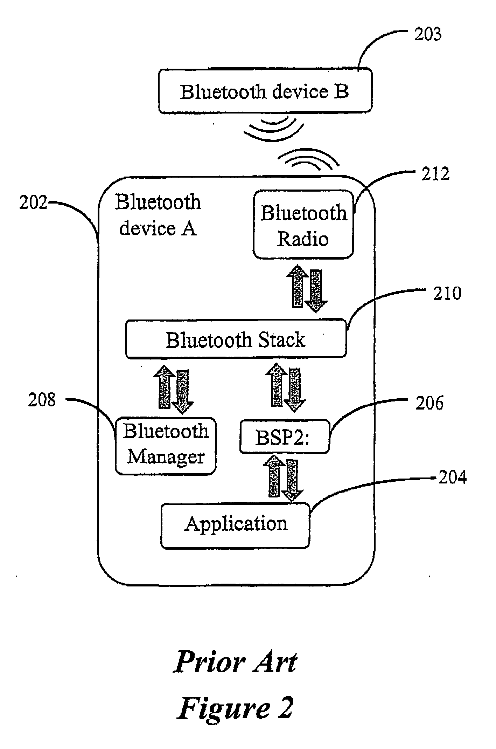

Figure 2 is a schematic diagram of a Bluetooth enabled Device A 202 that may have been used in the above method. Along with some hardware the diagram presents functional components involved in the Bluetooth communications, where the functional components are elements of software or states created by software that interact with the hardware of the device 202.

An application 204 operating within Device A 202 requests Bluetooth communications with Device B 203. A Bluetooth stack 210 may be provided either within or in addition to the operating system of the device 202. The stack 210 implements various layers of Bluetooth functionality, it provides RFComm protocol implementation to simulate serial port functionality of a Bluetooth radio 292 and it provides SDP implementation to do discovery and searching of Bluetooth devices and service.

A user uses the Bluetooth manager 208 to activate a connection to a remote device such as the Device B 203. The Bluetooth manager 208 then interacts with the Bluetooth stack 210, which creates a virtual serial port. A Bluetooth Manager 208 is in communications with the stack 210 and executes independently of it. The Bluetooth manager 208 is appropriate for providing an interface between a user and the stack 210. In this example the virtual serial port BSP2:206 is opened. The Bluetooth-stack 210 receives the data from the application 204, via the virtual serial port 206, and provides it to the Bluetooth radio 212.

In another system of the art an automatic scan-associate process is performed periodically to determine Bluetooth devices that are available for communication. Once it is determined that communications would be possible for a particular device it is added to a list of devices available for communications. In the above system the list of possible devices is not configurable by the user.

There are also systems in the art for which the availability of Bluetooth communications is advantageous yet it is not desirable to have the system "discoverable" during a scan-associate process. Such a situation may arise for systems located In public spaces. In this scenario one does not want the Bluebooth functionality visible to any member of the public, which has access to the system and has the ability to scan for a Bluetooth enabled device contained therein.

US6760804 discloses a device for interfacing legacy application with a wireless communication network. For this purpose, US6760804 uses a hardware interface device that creates a virtual communication port.

EP1261174 discloses enabling a remote control of a device within a wired network from a wireless network device.

US6760804 and EP1261174 do not address any problem associated with the scan-associate process at the time of communications, and do not state any user configurable list of possible devices.

Thus there is a need for a system that does not require a scan-associate process at the time of communications, provides a user configurable list of devices with which communications may be established and does not require the system to identify itself as "discoverable" to other Bluetooth enabled devices.

### SUMMARY OF THE INVENTION

The present invention relates to a system and method for SPP in Bluetooth protocol.

It is an object of the invention to provide an improved system and method for Bluetooth communications. It is a further object of the invention to obviate or mitigate at least one of the drawbacks of the prior art.

According to an aspect of the present invention, there is provided a method as defined in independent claim 1.

According to another aspect of the present invention, there is provided a wireless device as defined in independent claim 7. Further embodiments of the invention are specified in the appended dependent claims.

This summary of the invention does not necessarily describe all features of the invention. Other aspects and advantages of the invention, as well as the structure and operation of various embodiments of the invention, will become apparent to those ordinarily skilled in the art upon review of the following description of the invention in conjunction with the accompanying drawings.

### BRIEF DESCRIPTION OF THE DRAWINGS

These and other features of the invention will become more apparent from the following description in which reference is made to the appended drawings wherein:

FIGURE 1 is a flow chart of a method for connecting to a Bluetooth device of the Prior Art;

FIGURE 2 is a schematic block diagram of components of a Bluetooth device of the Prior Art;

FIGURE 3 is a schematic block diagram of a Bluetooth device according to an embodiment of the invention;

Figure 4 is a schematic diagram of components of a Bluetooth device according to an embodiment of the invention;

FIGURE 5a is a flow chart of a method of configuring a Bluetooth device according to an embodiment of the invention;

FIGURE 5b is a flow chart of a method for establishing communications to a Bluetooth device according to an embodiment of the invention;

FIGURE 6a is a schematic block diagram illustrating a connection to a Bluetooth device according to an embodiment of the invention; and

FIGURE 6b is a schematic block diagram illustrating the connection to a Bluetooth device according to an embodiment of the invention.

### DETAILED DESCRIPTION

The present invention provides a system and method of enabling Bluetooth communications between two Bluetooth enabled devices. The method allows for user configuration, limits the number of open serial ports and does not require the user perform a scan-associate process at the time of communications.

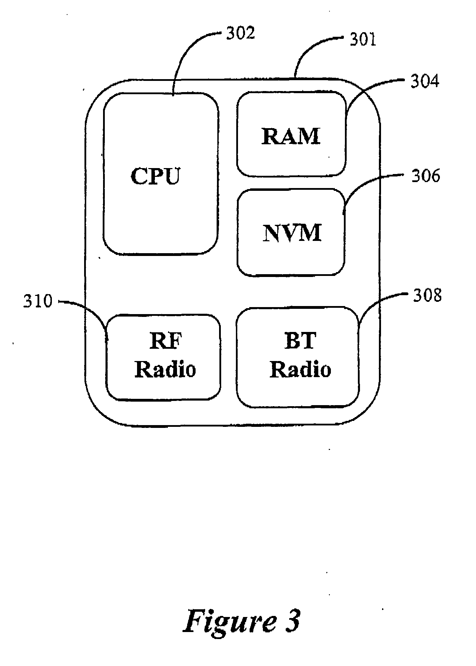

Figure 3 schematically depicts a device on which the present invention may operate. In the current embodiment this device is a hand held terminal appropriate for the collection of data. The device 301 contains within It a CPU 302, random access memory 304, non-volatile memory 306 and Bluetooth radio 308. The device of the current embodiment further contains RF radio 310. The term radio as is used to describe the RF radio 310 and Bluetooth radio 308 generally includes those elements that are required for these types of communications as will be apparent to a person of skill in the art. The system of the current invention will generally be stored as electronic signals within non-volatile memory 306. The system will be operative within CPU 302 and may be fully or partially loaded in RAM 304 during operation. It will be apparent to a person of skill in the art that the invention may be used on any device appropriate for storing and operating programs and is enabled for Bluetooth communications. It will also be apparent to one skilled in the art that, Figure 3 does not necessarily present all components within Bluetooth enabled device 301.

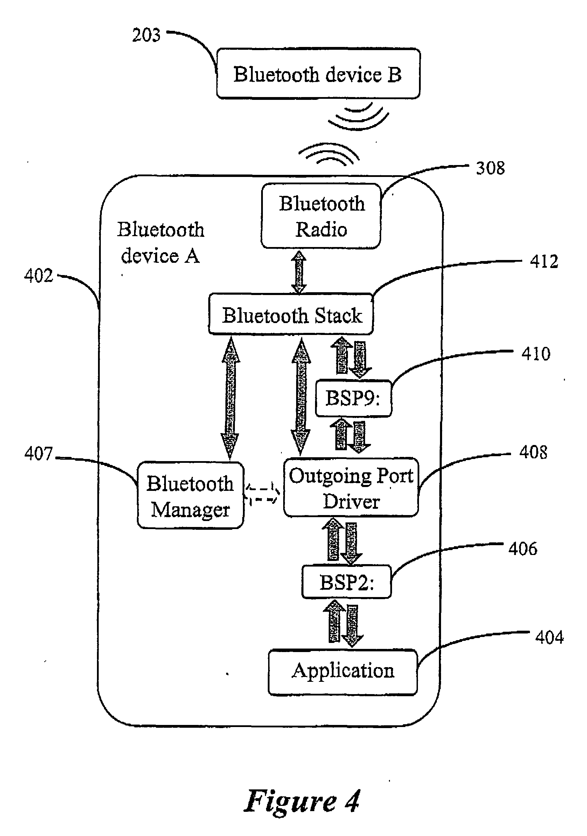

Figure 4 is a schematic block diagram of a Bluetooth enabled Device 402 according to the current embodiment. Figure 4 depicts features of this device at the time where the device 402 is communicating with the device B 203. As in Figure 2 the elements presented in Figure 4 may be elements of hardware, software or states constructed by the software, with the latter two elements generally interacting with and/ or operating on elements of hardware including those illustrated in Figure 3. Figure 4 also depicts the nature of interaction between the various elements. The solid block arrows indicate a flow of data and or function calls between the elements while a dashed arrow indicates the exchange of configurational information.

In the current embodiment the device A 402, in particular CPU 302, is running the Windows^{™} CE operating system thereon. It will be apparent to those of skill in the art that other operating systems including, but not limited to, Linux, Apple OS X and Palm OS are within the scope of the present invention. Bluetooth manager 407 is a Graphical User Interface (GUI) that is used by the user of the device A 402 to configure a Bluetooth subsystem of the device 402 for communications. The Bluetooth manager 407 communicates with a Bluetooth stack 412 and provides configurational information to an Outgoing Port Driver 408. In the current embodiment the stack 412 is a Microsoft^{™} Bluetooth stack, which is provided with the Windows CE operating system. Other implementations of the Bluetooth stack, which are appropriate for the implemented operating system, including Windows CE, are also within the scope of the present invention.

The Outgoing Port Driver 408 is a central entity of the current embodiment. The Outgoing Port Driver 408 is a virtual device driver that is in the form of a ,DLL file. The Outgoing Port Driver 408 creates the virtual serial port 406 and the Outgoing Serial Port 410 (BSP9:), which becomes the outgoing port. The virtual serial port 406 is used by the application 404. It is a virtual port in the sense that the application 404 considered it to be the outgoing port while it does not have any physical serial communication hardware associated therewith.. The Outgoing Port Driver 408 further provides the Bluetooth manager 407 to the user and ensures that the Bluetooth stack 412 connects to the desired device.

The virtual serial port 406, Outgoing Port Driver 408, Outgoing Serial Port 410, Bluetooth stack 412 are all elements of the data path that is formed between the application 404 and the Bluetooth radio 414.

The system of the present invention allows communication between Bluetooth enabled devices without performing a scan-associate process at the time of communications. Further, the method allows for communication to a device that is among a fixed list of devices. These aspects will now be considered with regard to the system presented in Figure 4.

The method of communication according to an embodiment of the invention is performed in two steps. In the first step the device is configured for communications. This step occurs prior to the time at which communications are desired. It may be performed by the user or a system administrator and may be considered as a set-up procedure. The second step occurs at the time of communications. It is during this step that the Device is configured as outlined in Figure 4.

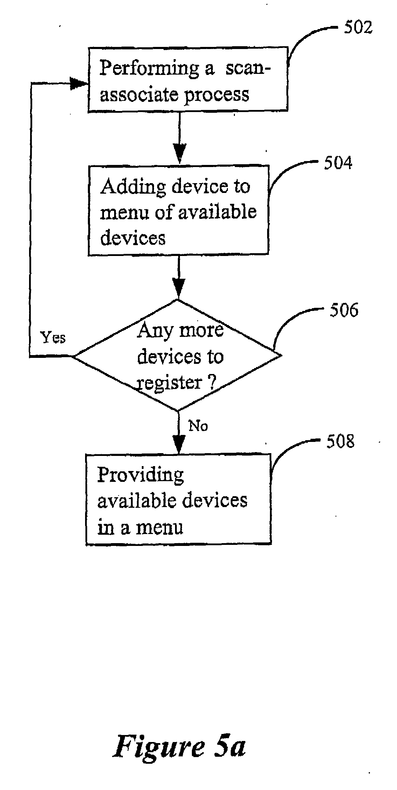

The set-up procedure according to an embodiment of the invention is shown in Figure 5a. At step 502 a scan-associate process is performed. A device that has responded to this process is added to a menu of available devices at step 504, At step 506 the process asks whether there are any more devices to be added to list of available devices. If there are additional devices the process returns to step 502 and another scan-associate process is performed. If there are no further devices to be registered the process moves to step 508 where a menu listing the available devices is provided. With regard to the discussion of Figure 4 the device B 203 would be a device that is listed in the above menu.

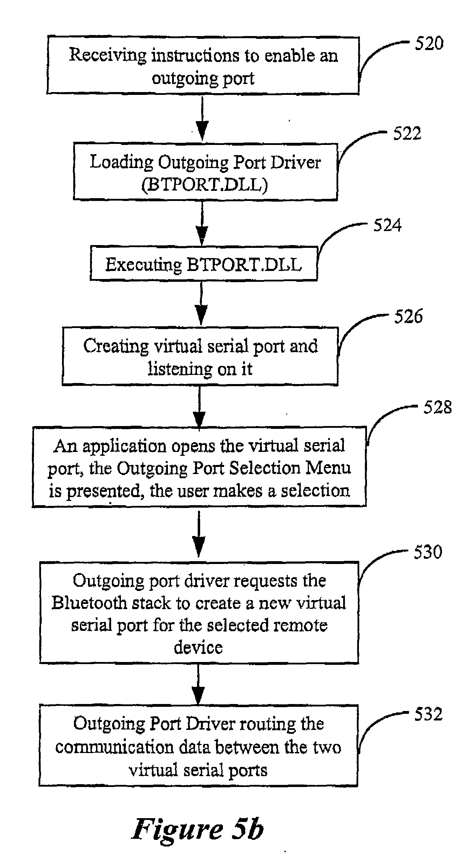

Figure 5b presents a flow chart of a method of establishing communications at the time that communications are desired. At step 520 the Bluetooth manager 407 receives instructions to load the Outgoing Port Driver 408. At step 522 the Outgoing Port Driver 408 is loaded. The Outgoing Port Driver 408 begins executing at step 524. At step 526 it creates the virtual serial port 406, which is named BSP2: and listens on the port 406. The application 404 opens the virtual serial port 406 and the user chooses the Bluetooth device to which remote connections are to be made, say device B 203, from the selection menu. The Outgoing Port Driver 408 receives this choice at step 528. At step 530 the Outgoing Port Driver 408 communicates with the Bluetooth stack 412 to create the Outgoing Serial Port 410 (BSP9). At step 532 the Outgoing Port Driver 408 creates the Outgoing Serial Port 410. The Outgoing Port Driver 408 redirects all the data flow from the application 404, via the Virtual Serial Port 406, to the Outgoing Serial Port 410. Thus data traffic is run to and from that port at step 534.

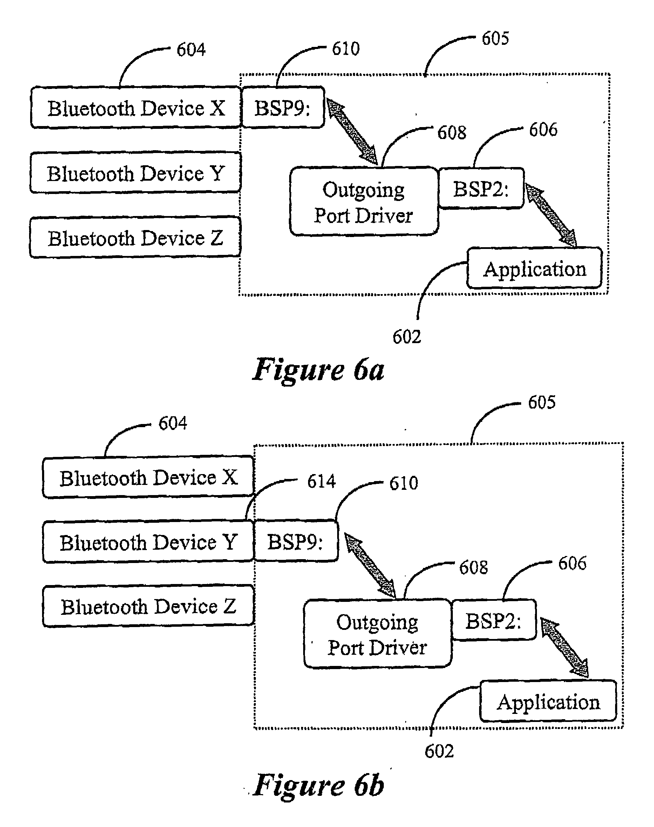

The procedure for connecting to a new device is schematically shown in Figures 6a and 6b. In Figure 6a an application 602 is in communication with a Device X 604, where the application 602 is operating in a device 605. In particular, data from the application 602 flows through the virtual serial port 606 (BSP2:) to the Outgoing Port Driver 608 and through the serial port 610 to the device X 604. The Device X 604 being selected from a selection menu accessed by and contained within the device A 402.

When the user of the Device A 605 wishes to establish communications with another device, say device Y 614 they bring up the Selection Menu and select the device from it. The Outgoing Port Driver 608 maintains the port BSP2: 606 that it created but deactivates the connection With Device X 604 by deleting the port BSP9: 610. The driver 608 activates a new connection with the Device Y 614 by creating the port BSP9: 610 again. This provides seamless switching over to the new device 614 without performing a scan-associate process.

The following example illustrates the operation and use of the system and method of the current embodiment. In a warehouse situation there is a selection of network access points, printers and scanners to which the operator of a hand held data capture terminal may have to communicate. At a predetermined interval an administrator performs a scan-associate process for the Bluetooth enabled devices to which the user may wish to communicate. Once this process is performed a list of available devices is compiled. During the use of the hand-held terminal the user can select the device to which communications are to be established from the selection menu.

The Outgoing Port Prompt Mode is a configuration that a user can set via the Bluetooth manager that governs the behaviour of the Outgoing Port Selection Menu. It has two choices "every time" and "once". Setting the value to "every time" means that the Outgoing Port Selection Menu will come up automatically every time an application 'opens' the Outgoing Port. Setting the value to "once" means the Outgoing Port Selection Menu will come up automatically only when an application "opens" the Outgoing Port and there is no current selection of remote device. The hotkey invocation of the Outgoing Port Selection Menu is available regardless of the value of the Outgoing Port Prompt Mode.

## Claims

1. A method of wireless communication between a first device (605) and a remote device (604, 614), the first device having a Bluetooth stack (412) for implementing Bluetooth functionality and an application (404), data being communicated to and from the application to the remote device (604, 614), **characterized in that** the method comprises the steps of:
setting up the first device prior to the communications, including:
performing a scan-associate process;
updating a menu of available remote devices in dependence upon a result of the scan-associate process; and
providing the menu listing the available remote devices;
establishing and performing the communications based on a selection from the menu without activating the scan-associate process, including:
receiving an instruction to create a port;
creating a virtual serial port and listening to the virtual serial port for a communication with the application on the first device;
opening the virtual serial port;
providing a selection menu of available remote devices to the user and receiving a selection of a second device to which communications are to be made, the second device being listed on the selection menu;
creating an outgoing serial port for a communication with the second device; and
routing data from the virtual serial port to the outgoing serial port; and
switching a connection from the second device to a third device, including:
providing the selection menu to the user and receiving a selection of the third device to which communications are to be made, the third device being listed on the menu;
deleting the outgoing serial port for the communication with the second device; and
creating a new outgoing serial port for a communication with the third device.

2. The method according to claim 1, further comprising:
setting an outgoing port prompt mode for governing the selection menu.

3. The method according to claim 2, wherein the outgoing port prompt mode includes a first mode in which the selection menu comes up automatically every time the outgoing port is open.

4. The method according to claim 2 or 3, wherein the outgoing port prompt mode includes a second mode in which the selection menu comes up automatically only when the outgoing port is open and there is no selection from the menu.

5. The method according to any one of claims 1-4, wherein the step of establishing and performing comprising:
loading an outgoing port driver for creating the virtual serial port and the outgoing serial port.

6. The method according to any one of claims 1-5, wherein the step of updating comprises:
compiling a list of the available Bluetooth devices once the scan-associate process is performed.

7. A wireless device (605) having a Bluetooth stack (412) for implementing Bluetooth functionality and an application (404), the wireless device for communicating data to and from the application to a remote device (604, 614), **characterized in that** the wireless device comprises:
means for setting up the wireless device prior to communicating the data, including:
means for performing a scan-associate process;
means for updating a menu of available remote devices in dependence upon a result of the scan-associate process; and
means for providing the menu listing the available remote devices;
means for establishing and performing the communications based on a selection from a selection menu of available remote devices without activating the scan-associate process, including:
means for providing a selection menu to a user for selection of a remote device from the menu; and
an outgoing port device for receiving an instruction to create a port, for creating a virtual serial port and listening to the virtual serial port for a communication with the application (404) and for creating an outgoing serial port for a communication with a first remote device in response to a selection of the first remote device from the selection menu, the outgoing port device further for deleting the outgoing serial port and creating a new outgoing serial port for communicating data with a second remote device in response to a selection of the second remote device from the selection menu;
wherein data from the application is routed from the virtual serial port to the outgoing serial port.

8. The wireless device according to claim 7, wherein the wireless device comprises an outgoing port prompt mode for governing the selection menu.

9. The wireless device according to claim 8, wherein the outgoing port prompt mode includes a first mode in which the selection menu comes up automatically every time the outgoing port is open.

10. The wireless device according to claim 8 or 9, wherein the outgoing port prompt mode includes a second mode in which the selection menu comes up automatically only when the outgoing port is open and there is no selection from the selection menu.

11. The wireless device according to any one of claims 7-10, wherein the outgoing port device is loaded.

12. The wireless device according to any one of claims 7-11, wherein the means for updating comprises means for compiling a list of the available remote devices once the scan-associate process is performed.

## Patentansprüche

1. Verfahren drahtloser Kommunikation zwischen einem ersten Gerät (605) und einem Ferngerät (604, 614), wobei das erste Gerät einen Bluetooth-Stapel (412) zur Implementierung von Bluetooth-Funktionalitäten und eine Anwendung (404) aufweist, wobei Daten zu und von der Anwendung zu dem Ferngerät (604, 614) kommuniziert werden, **dadurch gekennzeichnet, dass** das Verfahren die Schritte umfasst:
Einrichten des ersten Geräts vor den Kommunikationen, umfassend:
Ausführen eines Scan-assoziierten Prozesses;
Aktualisieren eines Menüs verfügbarer Ferngeräte in Abhängigkeit eines Ergebnisses des Scan-assoziierten Prozesses; und
Zurverfügungstellen der Menüliste der verfügbaren Ferngeräte;
Einrichten und Ausführen der Kommunikationen, basierend auf einer Auswahl von dem Menü ohne Aktivierung des Scan-assoziierten Prozesses, umfassend:
Empfangen einer Instruktion, um eine Schnittstelle zu erstellen;
Erstellen einer virtuellen seriellen Schnittstelle und Abhören der virtuellen seriellen Schnittstelle für eine Kommunikation mit der Anwendung auf dem ersten Gerät;
Öffnen der virtuellen seriellen Schnittstelle;
Zurverfügungstellen eines Auswahlmenüs von verfügbaren Ferngeräten dem Nutzer und Empfangen einer Auswahl eines zweiten Geräts, an welches die Kommunikationen zu richten sind, wobei das zweite Gerät in dem Auswahlmenü aufgelistet ist;
Erstellen einer seriellen Ausgangsschnittstelle für eine Kommunikation mit dem zweiten Gerät; und
Leiten von Daten von der virtuellen seriellen Schnittstelle zu der seriellen Ausgangsschnittstelle; und
Schalten einer Verbindung von dem zweiten Gerät zu einem dritten Gerät, umfassend:
Zurverfügungstellen des Auswahlmenüs dem Nutzer und Empfangen einer Auswahl von dem dritten Gerät, an das die Kommunikationen zu richten sind, wobei das dritte Gerät in dem Menü aufgelistet ist;
Löschen der seriellen Ausgangsschnittstelle für die Kommunikation mit dem zweiten Gerät; und
Erstellen einer neuen seriellen Ausgangsschnittstelle für eine Kommunikation mit dem dritten Gerät.

2. Verfahren nach Anspruch 1, ferner umfassend:
Aufsetzen eines Ausgangsschnittstelleneingabemodus zur Steuerung des Auswahlmenüs.

3. Verfahren nach Anspruch 2, wobei der Ausgangsschnittstelleneingabemodus einen ersten Modus umfasst, in dem das Auswahlmenü automatisch jedes Mal aufkommt, wenn die Ausgangsschnittstelle geöffnet ist.

4. Verfahren nach Anspruch 2 oder 3, wobei der Ausgangsschnittstelleneingabemodus einen zweiten Modus umfasst, in dem das Auswahlmenü nur dann automatisch aufkommt, wenn die Ausgangsschnittstelle geöffnet ist und keine Auswahl von dem Menü vorliegt.

5. Verfahren nach einem der Ansprüche 1 bis 4, wobei der Schritt des Einrichtens und Ausführens umfasst:
Laden eines Ausgangsschnittstellentreibers zur Erstellung der virtuellen seriellen Schnittstelle und der seriellen Ausgangsschnittstelle.

6. Verfahren nach einem der Ansprüche 1 bis 5, wobei der Schritt Aktualisieren umfasst:
Kompilieren einer Liste von verfügbaren Bluetooth-Geräten sobald der Scan-assoziierte Prozess ausgeführt ist.

7. Ein Drahtlosgerät (605) mit einem Bluetoothstapel (412) zur Implementierung von Bluetooth-Funktionalitäten und mit einer Anwendung (404), wobei das Drahtlosgerät zur Kommunikation von Daten zu und von der Anwendung zu einem Ferngerät (604, 614) vorgesehen ist, **dadurch gekennzeichnet, dass** das Drahtlosgerät umfasst:
Mittel zum Einrichten des Drahtlosgeräts vor der Kommunikation der Daten, umfassend:
Mittel zum Ausführen eines Scan-assoziierten Prozesses;
Mittel zum Aktualisieren eines Menüs von verfügbaren Ferngeräten in Abhängigkeit eines Ergebnisses des Scan-assoziierten Prozesses; und
Mittel zum Zurverfügungstellen des Menüs, das die verfügbaren Ferngeräte auflistet;
Mittel zum Einrichten und Ausführen der Kommunikationen, basierend auf einer Auswahl von dem Auswahlmenü der verfügbaren Ferngeräte ohne Aktivierung des Scan-assoziierten Prozesses, umfassend:
Mittel zum Bereitstellen eines Auswahlmenüs an einen Nutzer zur Auswahl eines Ferngeräts aus dem Menü; und
ein Ausgangsschnittstellengerät zum Empfangen einer Anweisung, um eine Schnittstelle zu erstellen, um eine virtuelle serielle Schnittstelle zu erstellen und die virtuelle serielle Schnittstelle für eine Kommunikation mit der Anwendung (404) abzuhören und zum Erstellen einer seriellen Ausgangsschnittstelle für eine Kommunikation mit einem ersten Ferngerät in Erwiderung auf eine Auswahl des ersten Ferngeräts von dem Auswahlmenü, das Ausgangsschnittstellengerät ferner für ein Löschen der seriellen Ausgangsschnittstelle und zum Erstellen einer neuen seriellen Ausgangsschnittstelle zur Kommunikation von Daten mit einem zweiten Ferngerät in Erwiderung auf eine Auswahl des zweiten Ferngeräts von dem Auswahlmenü;
wobei Daten von der Anwendung von der virtuellen seriellen Schnittstelle zu der seriellen Ausgangsschnittstelle geleitet sind.

8. Das Drahtlosgerät nach Anspruch 7, wobei das Drahtlosgerät einen Ausgangsschnittstelleneingabemodus zur Steuerung des Auswahlmenüs umfasst.

9. Das Drahtlosgerät nach Anspruch 8, wobei der Ausgangsschnittstelleneingabemodus einen ersten Modus umfasst, in welchem das Auswahlmenü automatisch jedes Mal aufkommt, wenn die Ausgangsschnittstelle offen ist.

10. Das Drahtlosgerät nach Anspruch 8 oder 9, wobei der Ausgangsschnittstelleneingabemodus einen zweiten Modus umfasst, in welchem das Auswahlmenü automatisch nur dann aufkommt, wenn die Ausgangsschnittstelle geöffnet ist und keine Auswahl von dem Auswahlmenü vorliegt.

11. Das Drahtlosgerät nach einem der Ansprüche 7 bis 10, wobei das Ausgangsschnittstellengerät geladen ist.

12. Das Drahtlosgerät nach einem der Ansprüche 7 bis 11, wobei die Mittel zur Aktualisierung Mittel zur Kompilierung einer Liste von verfügbaren Ferngeräten, sobald der Scan-assoziierte Prozess ausgeführt ist, umfassen.

## Revendications

1. Procédé de communication sans fil entre un premier dispositif (605) et à un dispositif à distance (604, 614), le premier dispositif ayant un empilement Bluetooth (412) destiné à mettre en oeuvre une fonctionnalité Bluetooth et une application (404), des données étant communiquées à et depuis l'application au dispositif à distance (604, 614), **caractérisé en ce que** le procédé comprend les étapes consistant à :
régler le premier dispositif avant la communication, comprenant :
la réalisation d'un processus de balayage-association ;
la mise à jour d'un menu de dispositifs à distance disponibles en fonction d'un résultat du processus de balayage-association ; et
la production du menu faisant la liste des dispositifs à distance disponibles ;
établir et réaliser la communication sur la base d'une sélection à partir du menu sans activer le processus de balayage-association, comprenant :
la réception d'une instruction pour créer un port ;
la création d'un port série virtuel et l'écoute du port série virtuel en vue d'une communication avec l'application sur le premier dispositif ;
l'ouverture du port série virtuel ;
la production d'un menu de sélection de dispositifs à distance disponibles à l'attention de l'utilisateur et la réception d'une sélection d'un deuxième dispositif vers lequel la communication doit être effectuée, le deuxième dispositif étant indiqué dans le menu de sélection ;
la création d'un port série de sortie pour une communication avec le deuxième dispositif ; et
l'acheminement de données du port série virtuel vers le port série de sortie ; et
commuter une connexion du deuxième dispositif vers un troisième dispositif, comprenant :
la production du menu de sélection à l'attention de l'utilisateur et la réception d'une sélection du troisième dispositif vers lequel la communication doit être effectuée, le troisième dispositif étant indiqué dans le menu ;
la suppression du port série de sortie pour la communication avec le deuxième dispositif ; et
la création d'un nouveau port série pour une communication avec le troisième dispositif.

2. Procédé selon la revendication 1, comprenant en outre :
le réglage d'un mode de déclenchement de port de sortie pour régir le menu de sélection.

3. Procédé selon la revendication 2, dans lequel le mode de déclenchement de port de sortie comprend un premier mode dans lequel le menu de sélection est présenté automatiquement à chaque fois que le port de sortie est ouvert.

4. Procédé selon la revendication 2 ou 3, dans lequel le mode de déclenchement de port de sortie comprend un second mode dans lequel le menu de sélection est présenté automatiquement uniquement lorsque le port de sortie est ouvert et qu'il n'y a pas de sélection depuis le menu.

5. Procédé selon l'une quelconque des revendications 1-4, dans lequel l'étape d'établissement et de réalisation comprend :
le chargement d'un pilote de port de sortie pour créer le port série virtuel et le port série de sortie.

6. Procédé selon l'une quelconque des revendications 1-5, dans lequel l'étape de mise à jour comprend :
la compilation d'une liste de dispositifs Bluetooth disponibles une fois que le processus de balayage-association a été réalisé.

7. Dispositif sans fil (605) comportant un empilement Bluetooth (412) pour mettre en oeuvre une fonctionnalité Bluetooth et une application (404), le dispositif sans fil étant destiné à communiquer des données à et depuis l'application au dispositif à distance (604, 614), **caractérisé en ce que** le dispositif sans fil comprend :
un moyen destiné à régler le dispositif sans fil avant la communication des données, comprenant :
un moyen destiné à réaliser un processus de balayage-association ;
un moyen destiné à mettre à jour un menu de dispositifs à distance disponibles en fonction d'un résultat du processus de balayage-association ; et
un moyen destiné à produire le menu faisant la liste des dispositifs à distance disponibles ;
un moyen destiné à établir et à réaliser la communication sur la base d'une sélection à partir du menu de sélection de dispositifs à distance disponibles sans activer le processus de balayage-association, comprenant :
un moyen destiné à produire un menu de sélection à l'attention d'un utilisateur pour la sélection d'un dispositif à distance à partir du menu ; et
un dispositif de port de sortie destiné à recevoir une instruction pour créer un port, à créer un port série virtuel et à écouter le port série virtuel en vue d'une communication avec l'application (404) et à créer un port série de sortie en vue d'une communication avec un premier dispositif à distance en réponse à une sélection du premier dispositif à distance depuis le menu de sélection, le dispositif de port de sortie étant en outre destiné à supprimer le port série de sortie et à créer un nouveau port série de sortie en vue de la communication de données avec un deuxième dispositif à distance en réponse à une sélection du deuxième dispositif à distance depuis le menu de sélection ;
dans lequel les données provenant de l'application sont acheminées du port série virtuel vers le port série de sortie.

8. Dispositif sans fil selon la revendication 7, dans lequel le dispositif sans fil comprend un mode de déclenchement de port de sortie pour régir le menu de sélection.

9. Dispositif sans fil selon la revendication 8, dans lequel le mode de déclenchement de port de sortie comprend un premier mode dans lequel le menu de sélection est présenté automatiquement à chaque fois que le port de sortie est ouvert.

10. Dispositif sans fil selon la revendication 8 ou 9, dans lequel le mode de déclenchement de port de sortie comprend un second mode dans lequel le menu de sélection est présenté automatiquement uniquement lorsque le port de sortie est ouvert et qu'il n'y a pas de sélection depuis le menu de sélection.

11. Dispositif sans fil selon l'une quelconque des revendications 7-10, dans lequel le dispositif de port de sortie est chargé.

12. Dispositif sans fil selon l'une quelconque des revendications 7-11, dans lequel le moyen de téléchargement comprend un moyen destiné à compiler une liste de dispositifs à distance disponibles une fois que le processus de balayage-association a été réalisé.
